# EUROPÄISCHE PATENTSCHRIFT

(11) **EP 2 705 992 B1**
(45) Veröffentlichungstag und Bekanntmachung des Hinweises auf die Patenterteilung: **23.08.2017**
(21) Anmeldenummer: 13003048.9
(22) Anmeldetag: 14.06.2013
(51) Int. Cl.: B60R 25/10, B60R 25/102, B60R 25/33

(54) **VERFAHREN ZUR ÜBERWACHUNG EINER PARKPOSITION EINES FAHRZEUGS**
METHOD FOR MONITORING A PARKING POSITION OF A VEHICLE
PROCÉDÉ DE SURVEILLANCE D'UNE POSITION DE STATIONNEMENT D'UN VÉHICULE

(30) Priorität: 05.09.2012 DE 102012017531
(43) Veröffentlichungstag der Anmeldung: 12.03.2014
(73) Patentinhaber: WABCO GmbH, 30453 Hannover (DE)
(72) Erfinder: Bleckmann, Björn, 30163 Hannover (DE); Wosnitza, Tobias, 30419 Hannover (DE)

(56) Entgegenhaltungen:
- US-A1- 2005 017 855
- US-A1- 2007 115 101
- US-A1- 2007 143 013
- US-A1- 2007 176 771
- US-A1- 2009 140 886
- US-A1- 2010 148 947
- US-B1- 6 342 847

## Beschreibung

Die Erfindung betrifft ein Verfahren zur Überwachung einer Parkposition eines Fahrzeugs, gemäß dem Oberbegriff des Patentanspruchs 1. Insbesondere geht es um die frühzeitige Erkennung eines Fahrzeugdiebstahls oder einer nicht autorisierten Fahrzeugbenutzung. Weiterhin betrifft die Erfindung ein Steuergerät.

Nutzfahrzeuge oder Fahrzeuge mit wertvoller Fracht können mit Hilfe von GPSfähigen Telematik-Systemen überwacht werden. Für das betreffende Fahrzeug wird eine geographische Fläche festgelegt. Diese wird üblicherweise als Watchbox bezeichnet. Verlässt das Fahrzeug die Watchbox, wird dies vom fahrzeugeigenen Ortungssystem, zum Beispiel GPS, Galileo oder Glonass erkannt und eine fahrzeugeigene Kommunikationseinrichtung sendet eine bestimmte Nachricht an einen definierten Empfänger. Bei dem Empfänger kann es sich auch um eine Einrichtung oder ein automatisiertes System zur Weiterleitung oder Verarbeitung derartiger Nachrichten handeln.

Es existieren Dienstanbieter, die Telematikportale für die Administration von Fahrzeugen und Watchboxen über das Internet bereitstellen. Ein Endanwender kann mit seinem Internetbrowser im Telematikportal des Dienstanbieters Einstellungen vornehmen, beispielsweise Fahrzeuge vorgeben, Form und Größe der Watchboxen definieren und den Fahrzeugen zuordnen und Modalitäten für die zu erzeugenden Nachrichten festlegen. Sobald ein zugeordnetes Fahrzeug eine Watchbox verlässt oder betritt, wird eine entsprechende Nachricht generiert. Die Nachricht wird beispielsweise im Telematikportal dargestellt oder per E-Mail oder Mobilfunk bestimmten Empfängern zugestellt oder auf andere Weise an einen Computer eines Betreibers einer Fahrzeugflotte übermittelt. Die Generierung der Nachricht kann zeitlich begrenzt werden. Eine einmal definierte und zugeordnete Watchbox bleibt bis zur manuellen Deaktivierung durch den Endanwender aktiv.

Die manuelle Erzeugung der Watchboxen für kurzzeitige Aufenthalte und/oder an vorher nicht bekannten Orten ist relativ aufwendig. Der Endanwender kann die Watchbox erst einrichten, wenn das Fahrzeug die Parkposition erreicht hat oder die Parkposition im Vorfeld schon dem Endanwender bekannt ist. Auch muss jede Watchbox manuell wieder deaktiviert werden, damit beim erneuten Betreten der Watchbox keine neue Nachricht generiert wird. Aufgrund der genannten Nachteile unterbleibt die Erzeugung von Watchboxen oder die Watchboxen werden mit Verzögerung erzeugt oder es werden Nachrichten generiert und gesendet, die für die Funktion keine Bedeutung haben, mit der Folge, dass die Nachrichten generell geringere Beachtung finden. Das bekannte Verfahren ist somit nicht geeignet, um einen Fahrzeugdiebstahl oder eine nicht autorisierte Fahrzeugbenutzung sicher zu erkennen.

Die Schriften US 2010/0148947 A1 und US 2007/0115101 A1 offenbaren Methoden und Systeme zur Kontrolle von Fahrzeugen in räumlich definierten Gebieten.

Aufgabe der vorliegenden Erfindung ist die Vereinfachung des bekannten Verfahrens. Insbesondere soll die Erzeugung und Deaktivierung einer Watchbox einfacher werden.

Zur Lösung der Aufgabe weist das erfindungsgemäße Verfahren die Merkmale des Anspruchs 1 oder des Anspruchs 2 auf.

Es wird ausgegangen von einem Fahrzeug, welches ein Telekommunikationssystem und zumindest mittelbar ein Ortungssystem aufweist. Im einfachsten Fall ergibt sich das Ortungssystem aus dem Zusammenwirken des fahrzeugeigenen Telekommunikationssystems mit einer zugehörigen Telekommunikations-Infrastruktur. So kann der Standort eines Mobilfunkteilnehmers unter günstigen Bedingungen allein über die Telekommunikations-Infrastruktur geortet werden. Vorzugsweise ist an die Nutzung des erfindungsgemäßen Verfahrens in Verbindung mit einem zusätzlichen Ortungssystem gedacht, insbesondere einem Satelliten-gestützten Ortungssystem. Daneben ist vorzugsweise ein über das Internet oder ein anderes Netzwerk zugängliches Telematikportal eines Dienstanbieters vorhanden. Der Endanwender kann über das Telematikportal Einstellungen vornehmen und Bedingungen für einen softwaregesteuerten Ablauf des Verfahrens definieren. Eingaben im Telematikportal werden in einer vom Dienstanbieter bereitgehaltenen Datenbank abgespeichert. Schließlich ist im Fahrzeug ein Steuergerät mit Telematik-ECU (ECU= elektronische Schalteinheit) vorgesehen; welches über das Telekommunikationssystem mit dem Dienstanbieter bzw. dem Telematikportal kommuniziert und darüber hinaus eine bestimmte Funktionalität aufweist. Der Betreiber einer Fahrzeugflotte kann zugleich Endanwender und/oder Dienstanbieter sein.

Es sind folgende Schritte vorgesehen:
a) Anhand von vorgegebenen Bedingungen wird festgestellt, ob sich das Fahrzeug in einer Parkposition befindet,
b) sofern sich das Fahrzeug in einer Parkposition befindet, wird automatisch eine vorgegebene Watchbox für das Fahrzeug aktiviert,
c) sobald das Fahrzeug die Watchbox verlässt, wird eine Nachricht generiert oder eine andere Aktion ausgelöst.

Vorzugsweise laufen alle Schritte a) bis c) automatisch und insbesondere in Echtzeit in der Telematik-ECU des Fahrzeugs ab. Die Telematik-ECU ist mit einer entsprechenden Software versehen. Das Telematikportal dient vorzugsweise nur zur einmaligen Konfiguration der Funktion und zur Auswertung und Verarbeitung der Nachrichten.

Auslöser für die Aktivierung der Watchbox ist nun nicht mehr die manuelle Eingabe des Endanwenders im Telematikportal, sondern das Erreichen einer Parkposition durch das Fahrzeug. Beim Verlassen der Watchbox wird beispielsweise per SMS oder E-Mail eine Nachricht generiert, die insbesondere die Information enthält, dass das Fahrzeug die Watchbox verlässt. Zusätzlich kann die Position des Fahrzeugs beim Verlassen der Watchbox übermittelt werden. Auch kann die Nachricht zusätzlich oder alternativ als Meldung im Telematikportal erscheinen. Möglich ist auch ein automatisierter Anruf bei einer vordefinierten Telefonnummer mit vorgegebener Sprachnachricht oder andere vordefinierte Aktionen, die vom Endanwender als sinnvoll angesehen werden und automatisiert ablaufen können.

Vorteilhafterweise wird die Watchbox deaktiviert oder entfernt, sobald das Fahrzeug die Watchbox verlässt. Die Deaktivierung oder Entfernung der Watchbox erfolgt wiederum automatisch bzw. softwaregesteuert, so dass ein neuerliches Einfahren in die gerade deaktivierte Watchbox und/oder ein Verlassen derselben keine Nachricht mehr auslöst.

Besonders vorteilhaft ist es, wenn die Daten der Watchbox und die Position des Fahrzeugs beim Verlassen der Watchbox gespeichert werden. Dadurch kann später nachvollzogen werden, an welcher Stelle das Fahrzeug die Watchbox verlassen hat. Trotz Deaktivierung und Entfernung der Watchbox ist später eine Nachverfolgung möglich. Die Speicherung kann in der Telematik-ECU, im Telematikportal bzw. beim Dienstanbieter oder bei einem Dritten erfolgen. Letzterer ist beispielsweise der Betreiber der Fahrzeugflotte. Gegebenenfalls werden die genannten Daten an den Dienstanbieter oder den Dritten übermittelt.

Es ist vorgesehen, dass das Erreichen der Parkposition aus wenigstens einer der nachfolgenden Bedingungen abgeleitet wird:
a) Die vom Ortungssystem festgestellte Position des Fahrzeugs ist für eine definierte Zeitdauer konstant. Beispielsweise können hierfür die Daten eines GPS-Ortungssystems herangezogen werden. Dabei kann als Position auch ein Bereich um einen Punkt herum verstanden werden.
b) Die vom Ortungssystem festgestellte Position entspricht einer vordefinierten Position. Eine vordefinierte Position ist beispielsweise ein Betriebsparkplatz, ein Rastplatz oder eine Werkstatt.
c) Definierte Teile einer Fahrzeugelektrik sind abgeschaltet. Beispielsweise ist die Zündung an einem Kraftfahrzeug abgeschaltet. Diese Information kann auch von modernen Anhängefahrzeugen mit einer eigenen elektronischen Schalteinheit verarbeitet werden.
d) Das Fahrzeug ist von einem Zugfahrzeug abgekoppelt. Bei pneumatischen Bremsen kann dieser Zustand durch Prüfung des Drucks in Druckluftleitungen erkannt werden.

Vorteilhafterweise ist die Watchbox eine Kreisfläche mit der Parkposition als geographischem Mittelpunkt und konfigurierbarem Radius. Mittelpunkt, Radius und gegebenenfalls andere Daten der Watchbox werden auf dem Telematikportal vom Endanwender konfiguriert und von der verwendeten Software abgespeichert.

Es ist vorgesehen, dass eine Nachricht beim Verlassen der Watchbox nur generiert wird, wenn das Fahrzeug die Watchbox innerhalb oder außerhalb eines definierten Zeitfensters verlässt. Das Zeitfenster wird entweder absolut definiert durch zwei Uhrzeiten oder relativ mit Bezug zum Zeitpunkt des Erreichens der Parkposition, etwa durch zeitliche Abstände zu einer Uhrzeit. Dabei kann das Zeitfenster insbesondere über das Telematikportal vorab eingestellt werden oder aber wenn sich das Fahrzeug bereits in der Parkposition befindet.

Es wird die durch die Merkmale der unabhängigen Ansprüche definierte Funktion nur ausgeführt, sofern ein vorgegebenes Zeitfenster erreicht oder verlassen ist. Beispielsweise kann es beabsichtigt sein, eine Watchbox nur während der Nachtzeit einzurichten und/oder nur dann eine Nachricht bei Verlassen der Watchbox zu generieren.

Zusätzlich kann vorgesehen sein, dass die Funktion gemäß den Merkmalen des Anspruchs 1 nur ausgeführt wird, wenn sich das Fahrzeug innerhalb oder außerhalb vorgegebener Flächen befindet. Eine vorgegebene Fläche hätte in diesem Fall die Funktion einer übergeordneten Watchbox mit eigenen Eigenschaften. Möglich ist auch eine Verknüpfung mit der zuvor genannten Beschränkung auf ein vorgegebenes Zeitfenster.

Es ist vorgesehen, dass die generierte Nachricht wenigstens eine der nachfolgenden Informationen enthält:
a) Uhrzeit beim Verlassen der Parkposition,
b) Uhrzeit beim Verlassen der Watchbox,
c) Position beim Verlassen der Watchbox,
d) Parkzeit seit Erreichen der Parkposition und bis Verlassen der Parkposition und/oder der Watchbox,
e) kumulierte Parkdauer über einen vorgegebenen Zeitraum, insbesondere über 24 Stunden,
f) Ursache für die Generierung der Nachricht (z.B. Verlassen der Watchbox).

Beim Verlassen der Watchbox werden insbesondere die Informationen zu b), c) oder zu a), b), c) in die Nachricht eingefügt. Mit den Informationen zu d), e) können automatisch Anhaltswerte für die Einhaltung der Lenk- und Ruhezeiten durch den Fahrer berechnet werden. Die Information zu f) ermöglicht eine Plausibilitätskontrolle.

Vorteilhafterweise wird auch beim Erreichen der Parkposition eine Nachricht generiert. So ist eine noch genauere Überwachung der Fahrzeugbewegungen möglich.

Ein Verfahren weist auch die folgenden Merkmale auf. Danach wird von einer gegebenen Watchbox ausgegangen, die auch nach Erreichen der Parkposition manuell eingegeben sein kann. Sobald das Fahrzeug die Watchbox verlässt, wird die Watchbox automatisch deaktiviert oder entfernt und zwar programmgesteuert und ohne manuellen Eingriff. Schon diese Maßnahme erleichtert wesentlich die Handhabung der Watchbox durch den

Endanwender und erhöht so die Akzeptanz des Verfahrens insgesamt beim Endanwender.

Gegenstand der Erfindung ist auch ein Steuergerät gemäß Anspruch 10 zur Durchführung eines erfindungsgemäßen Verfahrens. Dabei ist das Steuergerät vorzugsweise für die Verwendung in einem Fahrzeug vorgesehen und weist folgende Funktionen auf:
a) im Steuergerät sind Daten über eine aktuelle oder zumindest zeitnahe Position verarbeitbar,
b) im Steuergerät sind Daten einer Watchbox abspeicherbar,
c) im Steuergerät sind Kriterien hinterlegt, bei deren Erfüllung die Watchbox aktiviert wird,
d) im Steuergerät ist ein Algorithmus hinterlegt, mit dem die Position mit der aktivierten Watchbox abgeglichen und bei Verlassen der Watchbox eine Nachricht generiert oder eine andere Aktion ausgelöst wird.

Das Steuergerät vergleicht permanent oder in Intervallen "zulässige" Positionen, letztere definiert durch die Watchbox, mit der aktuellen Position. Hierzu erhält das Steuergerät insbesondere in Echtzeit die die eigene Position repräsentierenden Positionsdaten. Die Watchbox wurde zuvor extern definiert, an das Steuergerät übermittelt und dort abgespeichert. Das Steuergerät erkennt ein Verlassen der Watchbox und generiert und verschickt dann beispielsweise eine Nachricht speziellen Inhalts an einen definierten Adressaten. Vorzugsweise handelt es sich um den Betreiber einer Fahrzeugflotte, einen Dienstanbieter für ein Telematikportal oder andere.

Vorteilhafterweise enthält die generierte Nachricht wenigstens eine der nachfolgenden Informationen:
a) Uhrzeit beim Verlassen der Parkposition,
b) Uhrzeit beim Verlassen der Watchbox;
c) Position beim Verlassen der Watchbox,
d) Parkzeit seit Erreichen der Parkposition und bis Verlassen der Parkposition und/oder der Watchbox,
e) kumulierte Parkdauer über einen vorgegebenen Zeitraum, insbesondere über 24 Stunden,
f) Ursache für die Generierung der Nachricht (zum Beispiel Verlassen der Watchbox).

Insbesondere enthält die generierte Nachricht die vorranstehenden Informationen zu b) und c) bzw. zu a), b) und c). Natürlich können auch sämtliche der genannten Informationen oder weitere in der generierten Nachricht enthalten sein, ebenso andere Kombinationen von Informationen.

Nach einem weiteren Gedanken der Erfindung ist im Steuergerät ein Algorithmus hinterlegt, mit dem die Watchbox bei Verlassen derselben deaktivierbar ist oder automatisch deaktiviert wird. Auch kann eine Löschung der Watchbox beim Verlassen derselben veranlasst werden.

Erfindungsgemäß kann ein Positionsmodul zur Bestimmung der eigenen Position Bestandteil des Steuergeräts sein. Das Positionsmodul ermittelt die Position insbesondere in einem satellitengestützten Verfahren, wie zum Beispiel GPS, Galileo, Glonass oder andere. Alternativ ist das Positionsmodul außerhalb des Steuergeräts angeordnet und übermittelt die Daten der aktuellen Position zum Steuergerät.

Erfindungsgemäß weist das Steuergerät ein Telekommunikationsmodul zur drahtlosen Kommunikation auf. Über das Telekommunikationsmodul werden Nachrichten an definierte Empfänger versandt. Ebenso können Watchbox-Daten, welche extern definiert wurden, empfangen werden. Die Telekommunikation erfolgt vorzugsweise im Mobilfunk-Standard, zum Beispiel GSM, UMTS oder LTE. Andere drahtlose Verfahren sind ebenfalls möglich.

Vorteilhafterweise verfügt das Steuergerät über eine eigene elektrische Energiequelle. So kann ein Akku integriert sein. Das Steuergerät kann dadurch ausfallsicher arbeiten.

Nach einem weiteren Gedanken der Erfindung weist das Steuergerät Schnittstellen zum Anschluss an eine Fahrzeugelektrik und/oder für die Übertragung von Daten in Fahrzeugen auf. Zum einen kann auf diese Weise ein integrierter Akku geladen werden. Außerdem kann so festgestellt werden, ob bei einem Fahrzeug die Zündung ein- oder ausgeschaltet ist. Auch kann das Steuergerät zum Anschluss an einen Daten-Bus eingerichtet sein, etwa für einen CAN-Bus. Auch darüber kann das Steuergerät Informationen erhalten, die als Kriterien für die Aktivierung der Watchbox geeignet sind.

Erfindungsgemäß kann das Steuergerät eine Schnittstelle zum Anschluss eines Drucksensors aufweisen. In Nutzfahrzeugen üblich sind Druckluftbremsen. Bestimmte Zustände des Druckluftsystems können als Kriterien für die Aktivierung der Watchbox geeignet sein, zum Beispiel ein Druckabfall in einem Anhängefahrzeug mit Steuergerät beim Abkoppeln des Anhängefahrzeugs vom Zugfahrzeug.

Bestandteil des Steuergeräts ist insbesondere eine Telematik-ECU zum Ausführen der genannten Funktionen und für die Verbindung mit dem Positionsmodul, dem Telekommunikationsmodul, der elektrischen Energiequelle, mit Schnittstellen und/oder Anschlüssen von Sensoren.

Das Steuergerät ist vorzugsweise Bestandteil eines Fahrzeugs bzw. in ein Fahrzeug eingebaut. Dabei kann es sich um ein Zugfahrzeug oder Anhängefahrzeug handeln. Vorzugsweise ist das erfindungsgemäße Steuergerät vorgesehen für Fahrzeuge mit elektropneumatischem Bremssystem. Das Steuergerät kann mit anderen im Fahrzeug vorhandenen ECUs verknüpft oder sogar in eine vorhandene ECU integriert sein.

Ein weiteres Steuergerät weist folgende Funktionen auf :
a) im Steuergerät sind Daten über eine aktuelle oder zumindest zeitnahe Position verarbeitbar,
b) im Steuergerät sind Daten über eine aktivierte Watchbox abspeicherbar,
c) im Steuergerät ist ein Algorithmus hinterlegt, mit dem die aktivierte Watchbox bei Verlassen derselben deaktiviert werden kann.

Unabhängig von der Art der Aktivierung der Watchbox ist das Steuergerät so ausgelegt, dass die aktivierte Watchbox bei Verlassen derselben deaktivierbar ist oder automatisch deaktiviert wird. Bei dieser Ausführungsform müssen demnach Kriterien zur Aktivierung der Watchbox nicht hinterlegt sein.

Vorteilhafte Ausführungsformen der Erfindung werden nachfolgend anhand von Zeichnungen näher erläutert. Es zeigen:
- Fig. 1: einen Lastkraftwagen bzw. LKW auf einem Parkplatz vor Einfahrt in eine Parkbucht P,
- Fig. 2: den LKW in einer Parkbucht auf dem Parkplatz, mit einer Watchbox,
- Fig. 3: den LKW auf dem Parkplatz beim Verlassen der Watchbox,
- Fig. 4: eine nicht maßstäbliche Darstellung verschiedener Komponenten zur Durchführung des erfindungsgemäßen Verfahrens.

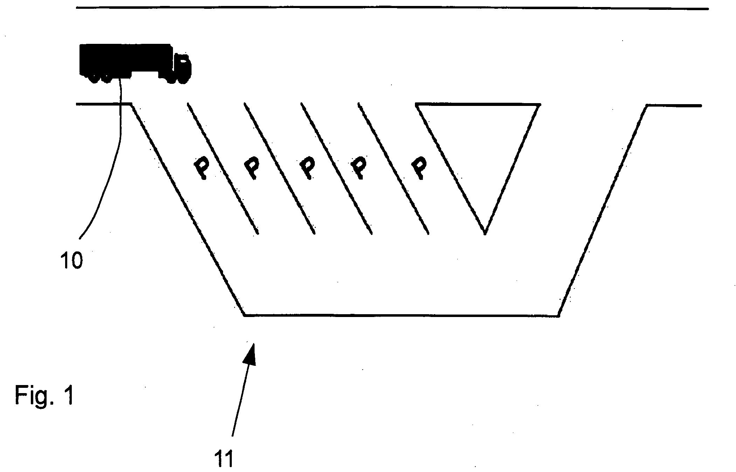

Ein Lastkraftfahrzeug bzw. LKW 10 eines Flottenbetreibers ist auf einen Parkplatz 11 gefahren und soll auf einem von mehreren Parkstreifen P abgestellt werden. Da sich der LKW 10 noch in Bewegung befindet, ist gemäß Figur 1 eine Watchbox noch nicht aufgespannt oder aktiviert.

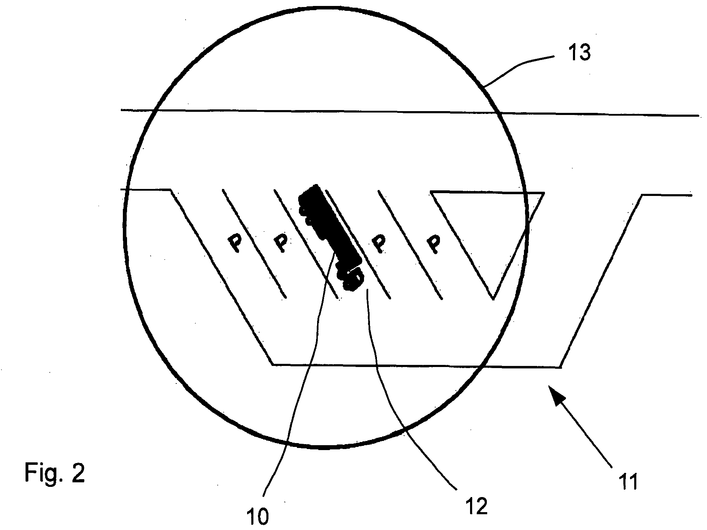

Gemäß Figur 2 hat der LKW 10 einen mittleren Parkstreifen 12 der Parkstreifen P erreicht und dort angehalten. Die Zündung des LKWs wurde abgestellt. Automatisch gilt eine Parkposition als erreicht und eine Watchbox 13 wird aktiviert. Dabei handelt es sich hier um eine kreisrunde Fläche mit einem definierten Radius und dem LKW 10 als Mittelpunkt. Andere Formen der Watchbox sind möglich.

Der LKW 10 ist mit einem nicht näher gezeigten GPS-Ortungssystem, einem Telekommunikationssystem für eine Mobilfunkverbindung und einer Telematik-ECU 14 ausgestattet. Die Telematik-ECU 14 prüft laufend und anhand verschiedener Kriterien, ob eine Parkposition erreicht ist. In diesem Fall ist die ausgeschaltete Zündung das erfüllte Kriterium. Die Watchbox 13 ist in der Telematik-ECU 14 abgelegt und wird dort aktiviert und mit den aktuellen Positionsdaten aus dem GPS-Ortungssystem verglichen.

Nach Erreichen der Parkposition wird eine entsprechende Nachricht per Mobilfunk automatisch und programmgesteuert an ein Internet-basiertes Telematikportal eines Dienstanbieters oder einen anderen Dienst zur Weiterverarbeitung übermittelt. In der Software des Telematikportals sind für den LKW 10 Form und Größe der Watchbox 13 hinterlegt. Durch Eintreffen der Nachricht werden die Daten ergänzt. Der Flottenbetreiber kann die insgesamt vorliegenden, aktuellen Daten abfragen oder automatisch übermittelt bekommen. Die Telematik-ECU 14 sendet in definierten Abständen die Positionsdaten an das Telematikportal oder andere Empfänger.

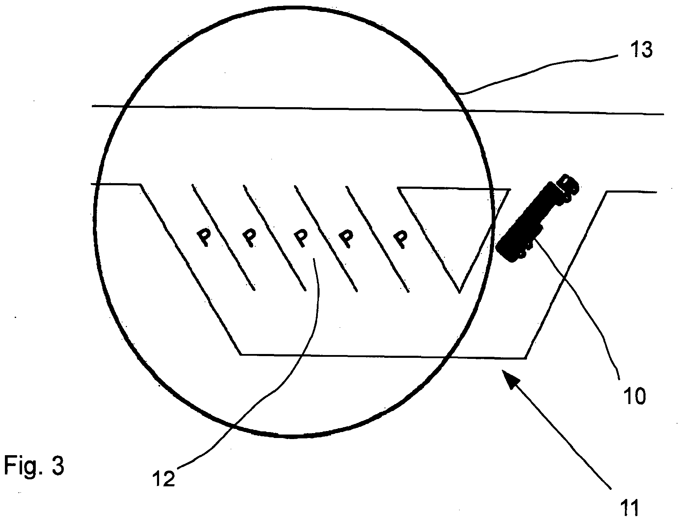

Sobald der LKW 10 seine Parkposition verlässt und dabei auch aus der Watchbox 13 hinausfährt, siehe Figur 3, wird automatisch eine Nachricht von der Telematik-ECU 14 generiert und einem vorher festgelegten Empfänger in vorher festgelegter Weise zugestellt, etwa per SMS, als E-Mail, als Telefonanruf mit vorgefertigter Sprachnotiz oder als Hinweis im Telematikportal im Internet. Empfänger kann auch das Telematikportal sein, welches die Nachricht weiterverarbeitet.

In dem zuvor beschriebenen Beispiel ist die Watchbox 13 in der Software der Telematik-ECU 14 hinterlegt und wird auch nur dort mit den Positionsdaten des LKWs 10 verglichen. Alternativ kann die Watchbox 13 außerhalb des LKWs 10, insbesondere im Telematikportal hinterlegt sein. Die Positionsdaten werden laufend an das Telematikportal übermittelt. Bei Erreichen der Parkposition wird die Watchbox 13 im Telematikportal aktiviert und im weiteren Verlauf in regelmäßigen Abständen mit den übermittelten Positionsdaten des GPS-Systems verglichen. Bei Verlassen der Watchbox 13 wird eine Nachricht vom Telematikportal an vordefinierte Empfänger versandt.

In beiden dargestellten Varianten wird die Watchbox 13 nach Verlassen derselben deaktiviert und vorzugsweise auch gelöscht. Zugleich werden die Daten der Watchbox 13 und die Position des LKWs 10 bei Verlassen der Watchbox 13 in einer über das Telematikportal abfragbaren Datenbank gespeichert und sind für eine spätere Nachverfolgung abrufbar.

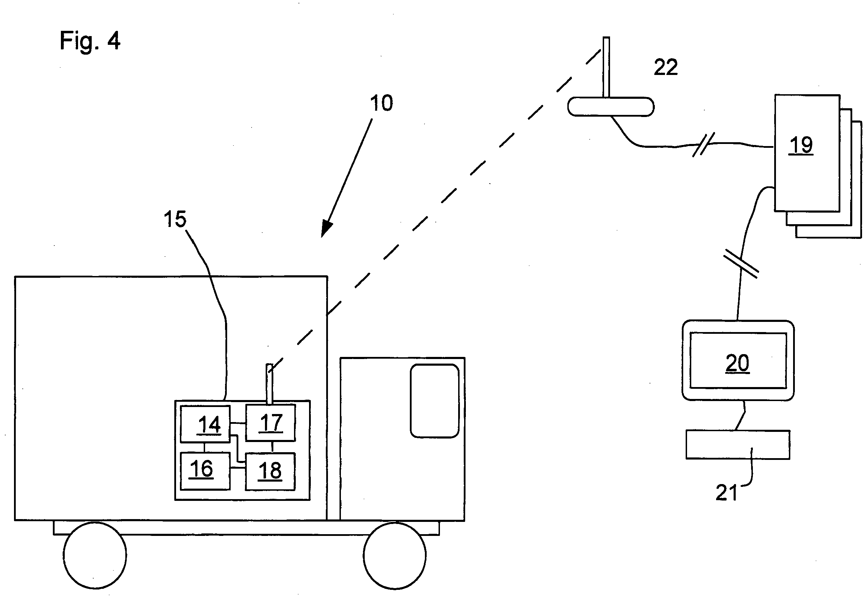

Wie anhand von Fig. 4 ersichtlich, ist die Telematik-ECU 14 integriert in ein Steuergerät 15, welches im LKW 10 an versteckter Stelle angeordnet ist.

Weitere integrierte Bestandteile des Steuergeräts 15 sind ein Positionsmodul 16 zur satellitengestützten Bestimmung der eigenen Position, ein Telekommunikationsmodul 17 und als elektrische Energiequelle ein Akku 18. Die genannten Teile 14 bis 18 sind soweit erforderlich über elektrische Leitungen bzw. Datenleitungen miteinander verbunden.

Zusätzlich weist das Steuergerät 15 vorzugsweise Schnittstellen zum Anschluss an die Elektrik des LKWs 10 und an ein fahrzeugeigenes Datenbus-System, etwa an einen CAN-Bus auf.

Ein Dienstanbieter und Betreiber des Telematikportals verwaltet Computer 19, auf denen eine entsprechende Telematik-Software eingerichtet ist. Über ein internetfähiges Endgerät, hier dargestellt durch Bildschirm 20 und Tastatur 21, kann der Flottenbetreiber für seine Fahrzeuge im Telematikportal des Dienstanbieters Daten seiner eigenen Fahrzeuge eingeben und dabei auch Watchboxen 13 vordefinieren und hinterlegen. Vorzugsweise wird für jedes Fahrzeug eine eigene Watchbox 13 definiert. Es können aber auch Gruppen von Fahrzeugen mit einheitlicher Watchbox 13 vorgegeben werden.

Die definierte Watchbox 13 wird vom Computer 19 des Dienstanbieters über eine Mobilfunkeinrichtung 22 an das Steuergerät 15 des betreffenden Fahrzeugs übermittelt und dort in der Telematik-ECU 14 abgelegt.

Sobald die oben bereits genannten Kriterien zur Aktivierung der im LKW 10 abgelegten Watchbox 13 erfüllt sind, wird letztere im Steuergerät 15 aktiviert. Dabei kann eine Nachricht über das Telekommunikationsmodul 17 und die Mobilfunkeinrichtung 22 an das Telematikportal oder andere Empfänger übersandt werden, damit der Flottenbetreiber sehen kann, für welche Fahrzeuge Watchboxen aktiviert sind.

Beim Verlassen der aktivierten Watchbox durch den LKW 10 wird eine entsprechende Nachricht in der Telematik-ECU 14 des Steuergeräts 15 generiert und über das Telekommunikationsmodul 17 und die Mobilfünkeinrichtung 22 an das Telematikportal übersandt, gegebenenfalls auch an andere Empfänger, etwa an den Flottenbetreiber. Der aktuelle Stand ist außerdem vom Flottenbetreiber im Telematikportal einsehbar.

## Patentansprüche

1. Verfahren zur Überwachung der Parkposition eines Fahrzeugs in Verbindung mit einem Ortungssystem, einem Telekommunikationssystem und einer Watchbox, mit folgenden Schritten:
a) Anhand von vorgegebenen Bedingungen wird festgestellt, ob sich das Fahrzeug in der Parkposition befindet,
b) sofern sich das Fahrzeug in der Parkposition befindet, wird automatisch eine vorgegebene Watchbox (13) für das Fahrzeug aktiviert,
c) sobald das Fahrzeug die Watchbox (13) verlässt, wird eine Nachricht generiert oder eine andere Aktion ausgelöst, **dadurch gekennzeichnet, dass** eine Nachricht beim Verlassen der Watchbox (13) nur generiert wird, wenn das Fahrzeug die Watchbox (13) innerhalb eines definierten Zeitfensters verlässt.

2. Verfahren zur Überwachung der Parkposition eines Fahrzeugs in Verbindung mit einem Ortungssystem, einem Telekommunikationssystem und einer Watchbox, mit folgenden Schritten:
a) Anhand von vorgegebenen Bedingungen wird festgestellt, ob sich das Fahrzeug in der Parkposition befindet,
b) sofern sich das Fahrzeug in der Parkposition befindet, wird automatisch eine vorgegebene Watchbox (13) für das Fahrzeug aktiviert,
c) sobald das Fahrzeug die Watchbox (13) verlässt, wird eine Nachricht generiert oder eine andere Aktion ausgelöst, **dadurch gekennzeichnet, dass** eine Nachricht beim Verlassen der Watchbox (13) nur generiert wird, wenn das Fahrzeug die Watchbox (13) außerhalb eines definierten Zeitfensters verlässt.

3. Verfahren nach Anspruch 1 oder 2, **dadurch gekennzeichnet, dass** die Watchbox (13) deaktiviert oder entfernt wird, sobald das Fahrzeug die Watchbox (13) verlässt.

4. Verfahren nach Anspruch 1, 2 oder 3, **dadurch gekennzeichnet, dass** die Daten der Watchbox (13) und die Position des Fahrzeugs beim Verlassen der Watchbox (13) gespeichert werden.

5. Verfahren nach Anspruch 1 oder einem der weiteren Ansprüche, **dadurch gekennzeichnet, dass** das Erreichen der Parkposition aus wenigstens einer der nachfolgenden Bedingungen abgeleitet wird:
a) Die vom Ortungssystem festgestellte Position des Fahrzeugs ist für eine definierte Zeitdauer konstant,
b) die vom Ortungssystem festgestellte Position entspricht einer vordefinierten Position des Fahrzeugs,
c) definierte Teile einer Fahrzeugelektrik sind abgeschaltet,
d) das Fahrzeug ist von einem Zugfahrzeug abgekoppelt.

6. Verfahren nach Anspruch 1 oder einem der weiteren Ansprüche, **dadurch gekennzeichnet, dass** die Watchbox (13) eine Kreisfläche ist, mit der Parkposition als Mittelpunkt und konfigurierbarem Radius.

7. Verfahren nach Anspruch 1 oder einem der weiteren Ansprüche, **dadurch gekennzeichnet, dass** die im Anspruch 1 oder 2 angegebenen Schritte nur ausgeführt werden, sofern ein vorgegebenes Zeitfenster erreicht oder verlassen ist.

8. Verfahren nach Anspruch 1 oder einem der weiteren Ansprüche, **dadurch gekennzeichnet, dass** die im Anspruch 1 oder 2 angegebenen Schritte nur ausgeführt werden, wenn sich das Fahrzeug innerhalb oder außerhalb vorgegebener Flächen befindet.

9. Verfahren nach Anspruch 1 oder einem der weiteren Ansprüche, **dadurch gekennzeichnet, dass** die generierte Nachricht wenigstens eine der nachfolgenden Informationen enthält:
a) Uhrzeit beim Verlassen der Parkposition,
b) Uhrzeit beim Verlassen der Watchbox (13),
c) Position beim Verlassen der Watchbox (13),
d) Parkzeit seit Erreichen der Parkposition und bis Verlassen der Parkposition und/oder der Watchbox (13),
e) kumulierte Parkdauer über einen vorgegebenen Zeitraum, insbesondere über 24 Stunden,
f) Ursache für die Generierung der Nachricht.

10. Steuergerät zur Durchführung des Verfahrens nach einem der voranstehenden Ansprüche, mit folgenden Funktionen:
a) im Steuergerät (15) sind Daten über eine aktuelle oder zumindest zeitnahe Position verarbeitbar,
b) im Steuergerät (15) sind Daten über eine Watchbox (13) abspeicherbar,
c) im Steuergerät (15) sind Kriterien hinterlegt, bei deren Erfüllung die Watchbox (13) aktiviert wird,
d) im Steuergerät (15) ist ein Algorithmus hinterlegt, mit dem die Position mit der aktivierten Watchbox (13) abgeglichen und bei Verlassen der Watchbox (13) eine Nachricht generiert oder eine andere Aktion ausgelöst wird.

11. Steuergerät nach Anspruch 10, **dadurch gekennzeichnet, dass** die generierte Nachricht wenigstens eine der nachfolgenden Informationen enthält:
a) Uhrzeit beim Verlassen der Parkposition,
b) Uhrzeit beim Verlassen der Watchbox (13),
c) Position beim Verlassen der Watchbox (13),
d) Parkzeit seit Erreichen der Parkposition und bis Verlassen der Parkposition und/oder der Watchbox (13),
e) kumulierte Parkdauer über einen vorgegebenen Zeitraum, insbesondere über 24 Stunden,
f) Ursache für die Generierung der Nachricht.

12. Steuergerät nach Anspruch 10 oder 11, **dadurch gekennzeichnet, dass** im Steuergerät (15) ein Algorithmus hinterlegt ist, mit dem die Watchbox (13) bei Verlassen derselben deaktiviert werden kann.

13. Steuergerät nach Anspruch 10 oder einem der weiteren Ansprüche, **gekennzeichnet durch** ein Positionsmodul (16) zur Bestimmung der eigenen Position.

14. Steuergerät nach Anspruch 10 oder einem der weiteren Ansprüche, **gekennzeichnet durch** ein Telekommunikationsmodul (17) zur drahtlosen Kommunikation.

15. Steuergerät nach Anspruch 10 oder einem der weiteren Ansprüche, **gekennzeichnet durch** eine eigene elektrische Energiequelle.

16. Steuergerät nach Anspruch 10 oder einem der weiteren Ansprüche, **gekennzeichnet durch** Schnittstellen zum Anschluss an eine Fahrzeugelektrik und/oder für die Übertragung von Daten in Fahrzeugen.

17. Steuergerät nach Anspruch 10 oder einem der weiteren Ansprüche, **gekennzeichnet durch** eine Schnittstelle zum Anschluss eines Drucksensors.

## Claims

1. Method for monitoring the parking position of a vehicle in conjunction with a locating system, a telecommunication system and a watchbox, having the following steps:
a) prescribed conditions are taken as a basis for establishing whether the vehicle is in the parking position,
b) provided that the vehicle is in the parking position, a prescribed watchbox (13) for the vehicle is automatically activated,
c) as soon as the vehicle departs from the watchbox (13), a message is generated or another action is triggered, **characterized in that** a message is generated on departure from the watchbox (13) only when the vehicle departs from the watchbox (13) inside a defined time window.

2. Method for monitoring the parking position of a vehicle in conjunction with a locating system, a telecommunication system and a watchbox, having the following steps:
a) prescribed conditions are taken as a basis for establishing whether the vehicle is in the parking position,
b) provided that the vehicle is in the parking position, a prescribed watchbox (13) for the vehicle is automatically activated,
c) as soon as the vehicle departs from the watchbox (13), a message is generated or another action is triggered, **characterized in that** a message is generated on departure from the watchbox (13) only when the vehicle departs from the watchbox (13) outside a defined time window.

3. Method according to Claim 1 or 2, **characterized in that** the watchbox (13) is deactivated or removed as soon as the vehicle departs from the watchbox (13).

4. Method according to Claim 1 or 2 or 3, **characterized in that** the data of the watchbox (13) and the position of the vehicle are stored on departure from the watchbox (13).

5. Method according to Claim 1 or one of the further claims, **characterized in that** arrival at the parking position is deduced from at least one of the following conditions:
a) the position of the vehicle established by the locating system is constant for a defined period,
b) the position established by the locating system corresponds to a predefined position of the vehicle,
c) defined parts of vehicle electrics are switched off,
d) the vehicle is decoupled from a towing vehicle.

6. Method according to Claim 1 or one of the further claims, **characterized in that** the watchbox (13) is a circular area with the parking position as the centre and with a configurable radius.

7. Method according to Claim 1 or one of the further claims, **characterized in that** the steps indicated in Claim 1 or 2 are carried out only provided that a prescribed time window is reached or left.

8. Method according to Claim 1 or one of the further claims, **characterized in that** the steps indicated in Claim 1 or 2 are carried out only when the vehicle is inside or outside prescribed areas.

9. Method according to Claim 1 or one of the further claims, **characterized in that** the generated message contains at least one of the following pieces of information:
a) time on departure from the parking position,
b) time on departure from the watchbox (13),
c) position on departure from the watchbox (13),
d) parking time since arrival at the parking position and before departure from the parking position and/or the watchbox (13)
e) cumulated length of parking over a prescribed period, particularly over 24 hours,
f) cause of generation of the message.

10. Controller for performing the method according to one the preceding claims, having the following functions:
a) the controller (15) can process data about a current or at least near-time position,
b) the controller (15) can store data about a watchbox (13),
c) the controller (15) stores criteria that, when met, prompt the watchbox (13) to be activated,
d) the controller (15) stores an algorithm that is used to match the position with the activated watchbox (13), and on leaving the watchbox (13) a message is generated or another action is triggered.

11. Controller according to Claim 10, **characterized in that** the generated message contains at least one of the following pieces of information:
a) time on departure from the parking positon,
b) time on departure from the watchbox (13),
c) position on departure from the watchbox (13),
d) parking time since arrival at the parking position and before departure from the parking position and/or the watchbox (13),
e) cumulated length of parking over a predescribed period, particularly over 24 hours,
f) cause of generation of the message.

12. Controller according to Claim 10 or 11, **characterized in that** the controller (15) stores an algorithm that can be used to deactivate the watchbox (13) on departure from it.

13. Controller according to Claim 10 or one of the further claims, **characterized by** a position module (16) for determining its own position.

14. Controller according to Claim 10 or one of the further claims, **characterized by** a telecommunication module (17) for wireless communication.

15. Controller according to Claim 10 or one of the further claims, **characterized by** a separate electric power source.

16. Controller according to Claim 10 or one of the further claims, **characterized by** interfaces for connection to vehicle electrics and/or for transmitting data in vehicles.

17. Controller according to Claim 10 or one of the further claims, **characterized by** an interface for connecting a pressure sensor.

## Revendications

1. Procédé de surveillance de la position de stationnement d'un véhicule en liaison avec un système de positionnement, un système de télécommunication et une zone de surveillance (Watchbox), comportant les étapes suivantes :
a) sur la base de conditions prédéterminées, il est établi si le véhicule se trouve à la position de stationnement,
b) si le véhicule se trouve à la position de stationnement, une zone de surveillance (13) prédéterminée est automatiquement activée pour le véhicule,
c) dès que le véhicule quitte la zone de surveillance (13) un message est généré ou une autre action est déclenchée, **caractérisé en ce qu'**un message n'est généré lorsque la zone de surveillance (13) est quittée que lorsque le véhicule quitte la zone de surveillance (13) à l'intérieur d'une fenêtre temporelle définie.

2. Procédé de surveillance de la position de stationnement d'un véhicule en liaison avec un système de positionnement, un système de télécommunication et une zone de surveillance, comportant les étapes suivantes :
a) sur la base de conditions prédéterminées, il est établi si le véhicule se trouve à la position de stationnement,
b) si le véhicule se trouve à la position de stationnement, une zone de surveillance (13) prédéterminée est automatiquement activée pour le véhicule,
c) dès que le véhicule quitte la zone de surveillance (13) un message est généré ou une autre action est déclenchée, **caractérisé en ce qu'**un message n'est généré lorsque la zone de surveillance (13) est quittée que lorsque le véhicule quitte la zone de surveillance (13) à l'extérieur d'une fenêtre temporelle définie.

3. Procédé selon la revendication 1 ou 2, **caractérisé en ce que** la zone de surveillance (13) est désactivée ou est éliminée dès que le véhicule sort de la zone de surveillance (13).

4. Procédé selon la revendication 1, 2 ou 3, **caractérisé en ce que** les données de la zone de surveillance (13) et la position du véhicule sont mémorisées lorsque la zone de surveillance (13) est quittée.

5. Procédé selon la revendication 1 ou l'une quelconque des autres revendications, **caractérisé en ce que** le fait que la position de stationnement est atteinte est déduit d'au moins l'une des conditions suivantes :
a) la position du véhicule établie par le système de positionnement est constante pendant un intervalle de temps défini,
b) la position établie par le système de positionnement correspond à une position prédéfinie du véhicule,
c) des parties définies d'un système électrique du véhicule sont mises hors tension,
d) le véhicule est détaché d'un véhicule de traction.

6. Procédé selon la revendication 1 ou l'une quelconque des autres revendications, **caractérisé en ce que** la zone de surveillance (13) est une surface circulaire ayant comme centre la position de stationnement et un rayon configurable.

7. Procédé selon la revendication 1 ou l'une quelconque des autres revendications, **caractérisé en ce que** les étapes définies à la revendication 1 ou 2 ne sont exécutées que si une fenêtre temporelle prédéterminée est atteinte ou quittée.

8. Procédé selon la revendication 1 ou l'une quelconque des autres revendications, **caractérisé en ce que** les étapes définies à la revendication 1 ou 2 ne sont exécutées que lorsque le véhicule se trouve à l'intérieur ou à l'extérieur de surfaces prédéterminées.

9. Procédé selon la revendication 1 ou l'une quelconque des autres revendications, **caractérisé en ce que** le message généré contient au moins l'une des informations suivantes :
a) heure à laquelle la position de stationnement est quittée,
b) heure à laquelle la zone de surveillance (13) est quittée,
c) position lorsque la zone de surveillance (13) est quittée,
d) temps de stationnement depuis que la position de stationnement a été atteinte et jusqu'à ce que la position de stationnement et/ou la zone de surveillance (13) soit quittée,
e) durée de stationnement cumulée supérieure à une période de temps prédéterminée, en particulier supérieure à 24 heures,
f) raison pour laquelle le message a été généré.

10. Appareil de commande destiné à mettre en oeuvre le procédé selon l'une quelconque des revendications précédentes, présentant les fonctions suivantes :
a) des données concernant une position actuelle ou au moins proche dans le temps peuvent être traitées dans l'appareil de commande (15),
b) des données concernant une zone de surveillance (13) peuvent être mémorisées dans l'appareil de commande (15),
c) des critères pour lesquels la zone de surveillance (13) est activée lorsqu'ils sont satisfaits sont stockés dans l'appareil de commande (15),
d) un algorithme au moyen duquel la position de la zone de surveillance (13) est ajustée est stocké dans l'appareil de commande (15), et lorsque la zone de surveillance (13) est quittée, un message est généré ou une autre action est déclenchée.

11. Appareil de commande selon la revendication 10, **caractérisé en ce que** le message généré contient au moins l'une des informations suivantes :
a) heure à laquelle la position de stationnement est quittée,
b) heure à laquelle la zone de surveillance (13) est quittée,
c) position lorsque la zone de surveillance (13) est quittée,
d) temps de stationnement depuis que la position de stationnement a été atteinte et jusqu'à ce que la position de stationnement et/ou la zone de surveillance (13) soit quittée,
e) durée de stationnement cumulée supérieure à une période de temps prédéterminée, en particulier supérieure à 24 heures,
f) raison pour laquelle le message a été généré.

12. Appareil de commande selon la revendication 10 ou 11, **caractérisé en ce qu'**un algorithme au moyen duquel la zone de surveillance (13) peut être désactivée lorsqu'elle est quittée est stocké dans l'appareil de commande (15).

13. Appareil de commande selon la revendication 10 ou l'une quelconque des autres revendications, **caractérisé par** un module de positionnement (16) destiné à déterminer une position qui lui est propre.

14. Appareil de commande selon la revendication 10 ou l'une quelconque des autres revendications, **caractérisé par** un module de télécommunication (17) destiné à effectuer une communication sans fil.

15. Appareil de commande selon la revendication 10 ou l'une quelconque des autres revendications, **caractérisé par** une source d'énergie électrique qui lui est propre.

16. Appareil de commande selon la revendication 10 ou l'une quelconque des autres revendications, **caractérisé par** des interfaces destinées à un raccordement à un système électrique de véhicule et/ou à la transmission de données dans des véhicules.

17. Procédé selon la revendication 10 ou l'une quelconque des autres revendications, **caractérisé par** une interface destinée à un raccordement à un capteur de pression.
